# EUROPÄISCHE PATENTSCHRIFT

(11) **EP 0 997 210 B1**
(45) Veröffentlichungstag und Bekanntmachung des Hinweises auf die Patenterteilung: **06.11.2002**
(21) Anmeldenummer: 99113076.6
(22) Anmeldetag: 06.07.1999
(51) Int. Cl.: B21D 53/26, B21D 22/14, B21D 22/16, B21H 1/04

(54) **Verfahren zum Formen eines scheibenförmigen Teiles mit Nabe und Umformrolle für das Verfahren**
Method of manufacturing of disc-shaped objects with hub and pressure roll for realising this method
Procédé de fabrication d'objets en forme de disque avec moyeu et rouleau de pression pour exécuter ledit procédé

(30) Priorität: 29.10.1998 DE 19849981; 01.04.1999 DE 19915027
(43) Veröffentlichungstag der Anmeldung: 03.05.2000
(73) Patentinhaber: Leico GmbH & Co. Werkzeugmaschinenbau, 59229 Ahlen, Westf. (DE)
(72) Erfinder: Säuberlich, Thomas, Dr., 33330 Gütersloh (DE); Specht, Gerold, 33428 Harsewinkel (DE); Grünewald, Ralf, 48317 Drensteinfurt (DE); Schachtrup, Matthias, 48308 Senden (DE)
(74) Vertreter: Wunderlich, Rainer, Dipl.-Ing.

(56) Entgegenhaltungen:
- EP-A- 0 190 958
- EP-A- 0 824 049
- DE-A- 19 513 634
- DE-A- 19 706 466
- FR-A- 1 454 814
- US-A- 4 056 291

## Beschreibung

Die Erfindung betrifft ein Verfahren nach dem Oberbegriff des Anspruchs 1 sowie eine Umformrolle nach dem Oberbegriff des Anspruchs 16.

Aus der DE 41 15 423 A1 geht ein gattungsgemäßes Verfahren hervor, bei dem ein rondenförmiges Werkstück in eine Drückwalzmaschine eingelegt und mit mindestens einem Gegenhalter festgespannt wird, wobei ein Bereich der Außenkontur des Gegenhalters einem Bereich der Innenkontur einer anzuformenden Nabe entspricht. Das rondenförmige Werkstück wird in Rotation versetzt. Mindestens eine Spaltrolle wird zugestellt und im wesentlichen radial eingefahren, wobei an dem Werkstück Material teilweise abgespalten wird.

Anschließend wird der abgespaltene Bereich mittels einer weiteren Drückrolle auf den Gegenhalter umgelegt. In einem weiteren Verfahrensschritt muß dann der umgelegte Bereich abgelängt werden. Es sind also zahlreiche Werkzeuge und Verfahrensschritte notwendig, wobei noch Materialabfall entsteht.

Aus der DE 197 06 466 A1 ist ein Verfahren bekannt, bei dem eine Materialverdrängung erfolgt. Durch eine Drückwalzrolle wird eine Blechronde in ihrem Umfangsbereich so beaufschlagt, daß in einem Mittenbereich der Ronde Material an einem zentral angeordneten Gegenhalter in axiale Richtung fließt und sich dadurch eine Nabe bildet. Der Materialfluß in axialer Richtung wird durch die Kontur des Gegenhalters begrenzt. Zwar fällt kein überschüssiges Material an, jedoch ist ein stabiler Druckspannungszustand, bei dem durch radialen Druck ein axialer Materialfluß bewirkt wird, in der Praxis nur sehr schwierig zu erreichen. Zudem sind grundsätzlich hohe Kräfte erforderlich. Hierdurch kann es zu unerwünscht hohem Materialabfluß und einer unvorteilhaft starken Verringerung der Werkstückdicke kommen. Aufgrund der hohen Kräfte besteht insbesondere bei hohen Umformgraden die Gefahr, daß die Nabe während der Umformung von der Ronde abgerissen wird.

Ein vergleichbares Verfahren ist in der DE 44 44 526 C1 offenbart. Hier wird eine Nabe an den Werkzeugstift der Hauptspindel einer Drückwalzmaschine angeformt, während der Materialfluß in axialer Richtung von einem Vorsetzer begrenzt wird. Dieser weist einen Durchmesser auf, der grösser ist als der Durchmesser des Werkzeugstiftes. Durch den so entstehenden Anschlag kann Material nur bis an die entsprechend vorgegebene Position fließen. Die durch die hohen Druckspannungen verursachten Probleme sind mit jenen aus der oben genannten DE 197 06 466 A1 vergleichbar.

Eine weitere Möglichkeit zum Formen von Naben ist in der DE 196 43 820 C1 offenbart. Bei dem beschriebenen Verfahren wird die Nabe in der Weise geformt, daß durch eine von außen angreifende Rolle zunächst eine Falte ausgebildet wird, die dann zur Nabe zusammengedrückt wird. Dieses Verfahren birgt die Nachteile, daß es während des Bildens der Falte zu Rissen kommen kann, wenn die Verformungsfähigkeit des Werkstoffes überschritten wird. Dies führt letztlich zu einer Instabilität des Werkstückes. Eine derart geformte Nabe wird im Hinblick auf spätere Beanspruchungen eine geringere Festigkeit als eine massive Nabe aufweisen. Durch die Falte kann bei hohen angreifenden Kräften eine Rißausbreitung gefördert werden.

Ein anderes Verfahren zur Herstellung einer Nabe ist in der DE 195 13 634 C2 offenbart. Hier wird ein flanschförmiger Fortsatz eines Werkstückes in Radialrichtung in zwei "Flügel" gespalten, und nachfolgend wird einer dieser Flügel gegen ein Futter gedrückt - der Flügel wird quasi "umgeklappt", wodurch die erwünschte Nabe entsteht.

Ein weiteres Beispiel zum Formen einer Nabe ist aus der EP 0 824 049 A1 bekannt. Hier wird durch eine Drückrolle das Werkstückmaterial "wellenförmig" zum Zentrum eines Werkstückes geschoben, so daß letztlich eine Nabe geformt wird. Nachteilig an diesem Verfahren ist, daß auf diese Weise nur kurze, dünnwandige Naben hergestellt werden können. Weiterhin ist der Fertigungsprozeß schwierig, da ein komplexer dreidimensionaler Spannungszustand eingestellt werden muß.

Die DE 196 20 812 A1 zeigt eine Möglichkeit auf, in einfacher Weise aus einem rohrförmigen Werkstück eine Nabe zu formen. Dieses an sich gut funktionierende Verfahren geht somit von einem anderen Ausgangswerkstück aus und ist folglich nicht geeignet, die bisher benannten Nachteile des Standes der Technik bei der Herstellung aus einer Ronde auszuräumen.

Weitere konventionelle Verfahren zum Herstellen von Naben bedienen sich des Zusammenfügens zweier oder mehrerer Halbfertigteile. Durch dieses Zusammenfügen kommt es stets zu Fertigungstoleranzen, die die Qualität des Endproduktes beeinträchtigen. Da das Zusammenfügen ferner meist durch Schweißen erfolgt, besteht eine weitere unerwünschte Folge darin, daß sich die Werkstücke durch den Wärmeeinfluß verziehen. Ferner besteht die Gefahr der Veränderung des Werkstückgefüges.

Weiterhin ist bekannt, eine Nabe herzustellen, indem ein zylindrischer Dorn durch eine gelochte Vorform gepreßt wird. Dadurch wird Materialvolumen aus dem inneren Bereich der gelochten Vorform zu einer Nabe abgestreckt. Auch dieses Verfahren ist im Hinblick auf die herstellbare Nabendicke und Nabenlänge eingeschränkt.

Eine gattungsgemäße Umformrolle geht aus der DE 35 39 835 C1 hervor. Diese Rolle ist jedoch nicht zur Herstellung einer Nabe in einem Mittenbereich eines rondenförmigen Werkstücks geeignet.

Der Erfindung liegt somit die **Aufgabe** zugrunde, die genannten Nachteile des Standes der Technik auszuräumen und insbesondere ein einfaches und effizientes Verfahren und eine dazu einsetzbare Umformrolle bereitzustellen, mit welchen Naben schnell und materialsparend angeformt werden können.

Diese Aufgabe wird mit den Merkmalen der unabhängigen Patentanspruchs 1 bzw. des Patentanspruchs 16 gelöst.

Es ist vorgesehen, daß an das Werkstück eine Rolle mit einer Trennkante und einem sich daran angrenzenden Stauchbereich zugestellt wird, dessen Außenprofil einer Außenumfangskontur der anzuformenden Nabe entspricht, daß beim Zustellen der Rolle das Werkstück von einer Trennkante der Rolle kontaktiert und Material des Werkstücks teilweise abgetrennt wird und daß das abgetrennte Material entlang des Stauchbereiches der Rolle axial fließt und radial gestaucht wird, wobei die Nabe entsprechend dem Außenprofil des Stauchbereiches angeformt wird. Durch dieses Verfahren ist es möglich, ausgehend von einer geometrisch einfachen Vorform, nämlich einem rondenförmigen Werkstück, in effektiver Weise komplexe Werkstücke herzustellen. Insbesondere ist das Zusammenfügen mehrerer Halbfertigteile nicht erforderlich. Durch den Umstand, daß beim Zustellen der Rolle das Werkstück zunächst von einer Trenn- oder Schneidkante der Rolle kontaktiert wird, kann mit verminderten Druckkräften gearbeitet werden, wodurch die mit den großen erforderlichen Kräften verbundenen Nachteile des Standes der Technik beseitigt werden. Im Vergleich zu einer stumpfen Rolle dringt die mit einer Trennkante versehene Rolle verhältnismäßig leicht in das Werkstück ein. Nachfolgend wird durch das radiale Einfahren der Rolle ein Materialfluß in im wesentlichen axialer Richtung bei einer gleichzeitigen radialen Stauchung bewirkt. Das radiale Einfahren der Rolle wird beendet, wenn der Abstand zwischen der Rolle und dem Gegenhalter der erwünschten Dicke der Nabenwand entspricht.

Im Gegensatz zum Stand der Technik erfolgt insbesondere der axiale Materialfluß nicht beabstandet von der Rolle an einer zentralen, formgebenden Einrichtung, wie z.B. einem Werkzeugstift, sondern während des gesamten Zustellvorganges unmittelbar an der Umformrolle. Dadurch sind die momentan wirkenden Kräfte vermindert, was für einen schnellen und formgenauen Fertigungsprozeß positiv ist. Besonders günstig ist das erfindungsgemäße Verfahren durch den Umstand, daß die axiale Länge sowie die Kontur der Nabe durch die Rollengeometrie, d.h. das Außenprofil des Stauchbereiches mit einem Stauchabsatz, definiert ist. Dies stellt beispielsweise sicher, daß etwa ein anfänglicher Materialfluß in axialer Richtung durch die Rolle begrenzt und eine Auskragung gebildet wird. Diese wird durch das weitere radiale Zustellen gestaucht und verdickt. Ein weiterer mit der Formgebung durch die Rollengeometrie im Zusammenhang stehender Vorteil liegt darin, daß durch schlichtes Auswechseln der Rolle die Nabengeometrie verändert werden kann. Der Stauchbereich kann ein im wesentlichen gerades, konvexes oder konkaves Außenprofil aufweisen, so daß auch von einer Zylinderform abweichende Naben formbar sind.

Vorteilhaft ist es, wenn nach dem Beenden des radialen Einfahrens und vor dem Beenden des Formvorganges eine Haltezeit zur Kalibrierung eingeräumt wird. Im Zusammenhang mit den vorangehenden Verfahrensschritten wird hierdurch die Nabenform und das Werkstoffgefüge zusätzlich verbessert. Es erfolgt eine Verfestigung, welche zu einem höheren Widerstand gegen Rißbildung sowie zu einer höheren Verschleißund Dauerfestigkeit der Nabe führt.

Ferner kann vorteilhaft sein, wenn die Nabe und/oder der Gegenhalter und/oder eine Verlängerung des Gegenhalters durch mindestens eine Stützrolle abgestützt werden. Hierdurch wird beim Umformen eines hochfesten Materials eine zu starke Ausbiegung des Werkstückes mit dem Werkzeug während der Umformung verhindert und so eine höhere Maßgenauigkeit erreicht.

Weiter kann es nützlich sein, wenn zum Abstützen des Werkstückes mindestens eine axiale Stützrolle zugestellt wird. Dies ist insbesondere dann vorteilhaft, wenn die Wanddicke der Ronde sehr dünn gewählt wird. Die Wahl dieser Wanddicke kann im Zusammenhang mit der Bestimmung der Größe der herzustellenden Nabe im Vorfeld annähernd theoretisch berechnet werden. So kann auch festgestellt werden, ob der Einsatz einer axialen Stützrolle vorteilhaft ist. Der Einsatz einer Stützrolle bei geringen Wanddicken kann während der Umformung des Werkstückes ein Ausbiegen verhindern und zu einer weiteren Verfestigung und Glättung des Rondenrandes führen.

In einer bevorzugten Ausführungsform setzt die Rolle mit ihrer Trennkante am Außenrand des Werkstückes an. Hierdurch kann Material vom gesamten Umfang der Ronde zur Ausbildung der Nabe genutzt werden. Ferner erhält man eine, unter Umständen erwünschte, gleichförmige Scheibendicke.

In einer anderen Ausführung des Verfahrens setzt die Rolle mit ihrer Trennkante innerhalb des Außenrandes am Werkstück an. Auch diese Variante kann vorteilhaft sein, wenn nämlich der äußere Rand eine erhöhte Dicke aufweisen soll. Dies kann im Hinblick auf das Einbringen einer Verzahnung oder einer sonstigen Verformung des äußeren Randes nützlich sein.

Ferner ist das Verfahren vorteilhaft dadurch weitergebildet, daß der Rand des umgeformten Werkstückes verdickt und/oder durch Drückwalzen, Bordieren oder Faltstauchen umgebogen wird und mit einer weiteren Rolle ein Profil oder eine Verzahnung eingebracht wird. Damit ist es möglich, den Anforderungen entsprechend, verschiedenartige Teile zu fertigen.

Der Gegenhalter ist bevorzugt zylinderförmig, so daß übliche Naben mit zylindrischer Innenkontur zwischen dem Gegenhalter und der Rolle geformt werden können. Grundsätzlich sind auch andere Formen denkbar, wie eine konische Ausbildung des Gegenhalters.

In einer weiteren vorteilhaften Verfahrensvariante wird das rondenförmige Werkstück mit zwei gegeneinander wirkenden Gegenhaltern eingespannt, und in dieser Einspannung wird das Werkstück auf beiden Seiten bearbeitet und auf beiden Seiten ein Nabenbereich angeformt. Durch diese Ausführung des Verfahrens ist es ohne Umspannen möglich, auf beiden Seiten des Werkstückes Naben auszuformen, wobei deren Innendurchmesser Jeweils den Außendurchmessern der Gegenstücke entsprechen. In einem Arbeitsgang und in einer Einspannung kann somit das Ausbilden von zwei Naben erfolgen.

Die Bearbeitung erfolgt vorteilhafterweise gleichzeitig durch zumindest zwei Rollen. Moderne Drückwalzmaschinen erlauben die gleichzeitige Zustellung von zehn oder mehr Umformrollen. Diese sind vorteilhafterweise so verteilt über den Umfang des Werkstücks angeordnet, daß sich die radialen Quer- oder Biegekräfte kompensieren. Die Rollen können paarweise axial gegenüberliegend angeordnet und zugestellt werden. In letzterem Fall ist es auch vorteilhaft, mit einer entlang ihres Umfanges mit einer Nut versehenen Stützrolle den Außenrand des Werkstückes abzustützen. Dies ist insbesondere dann nützlich, wenn durch das Ausformen der beiden Naben nur noch ein dünner Mittensteg stehen bleibt, so daß durch die Stabilisierung eine Ausbiegung dieses Mittensteges zu verhindern ist.

Nach einem weiteren Aspekt der Erfindung ist vorgesehen, daß die Rolle entlang des radial verlaufenden Bereichs radial eingefahren und Material des Werkstückes in radiale Richtung verdrängt wird, wobei die Wandstärke des Werkstükkes in dem betreffenden Bereich verringert wird, und daß zum Verändern der Wandstärke des Werkstückes die Rolle während des radialen Einfahrens in axialer Richtung verstellt wird. Auf diese Weise kann in einem einzigen Verfahrensschritt - vorzugsweise bei einmaligem Überfahren der Rolle über das Werkstück - eine gezielte Materialverteilung an dem Werkstück eingestellt werden. Die Kontur des Werkstükkes in seinem radialen Bereich kann variabel gestaltet werden, da diese durch das Zusammenwirken der radialen und der axialen Relativbewegung der Rolle bezüglich des Werkstückes bestimmt wird. Durch eine der Belastung entsprechende Verdünnung oder Verdickung des Werkstückes wird eine nahezu optimale Gewichtsausnutzung an dem fertigen Getriebeteil erreicht.

Dabei kann es vorteilhaft sein, wenn das axiale Zustellen der Rolle zumindest teilweise kontinuierlich erfolgt. Damit ergibt sich eine glatte Oberflächenkontur des Werkstückes, was je nach Einsatzbereich des Getriebeteils vorteilhaft sein kann. Es kann allerdings auch nützlich sein, wenn das axiale Zustellen der Rolle zumindest teilweise diskontinuierlich erfolgt. Es können somit Stufen oder sonstige Formen in die Oberfläche des Getriebeteils eingebracht werden, so daß eine erhebliche Flexibilität im Hinblick auf die Ausgestaltung des Endproduktes vorliegt.

Vorzugsweise ist vorgesehen, daß die Wandstärke in einem radial innen liegenden Bereich des Werkstückes radial nach innen verringert wird. Der Außenrand der Ronde behält somit seine ursprüngliche Dicke und steht daher mit seinem gesamten Material für eine Weiterverarbeitung, insbesondere für das Einbringen von Verzahnungen, zur Verfügung. Der Innenbereich erhält gezielt eine ausreichend große Flexibilität, was im Betrieb zur Vermeidung von Verschleiß auf den Zahnoberflächen sowie zur Reduzierung der Geräuschentwicklung von großem Vorteil ist.

Die Erfindung betrifft ferner eine Umformrolle zur Verwendung beim Formen einer Nabenscheibe, welche an ihrem Umfang eine Trennkante, mit welcher ein Materialbereich eines randförmigen Werkstücks abtrennbar ist, sowie ein angrenzender Stauchbereich mit einem Außenprofil und einem umlaufend angeordneten Vorsprung vorgesehen sind, wobei das Außenprofil des Stauchbereiches einer Außenumfangskontur der anzuformenden Nabe entspricht. Mit dieser Rolle sind die genannten Vorteile des erfindungsgemäßen Verfahrens verfügbar. Insbesondere erfüllt die Rolle gleichzeitig mehrere Funktionen. Zunächst dient sie dem vergleichsweise leichten Eindringen der Rolle in das Werkstück. Weiterhin bewirkt sie beim Zustellen den für die Ausbildung der Nabe erforderlichen Materialfluß. Ferner bildet sie die Begrenzung des axialen Materialflusses und dient dem radialen Stauchen und Verdicken zur gewünschten Endform.

Die an die Trennkante angrenzenden Umfangsflächen der Rolle schließen einen stumpfen oder vorteilhafterweise einen spitzen Winkel ein, wodurch eine keilförmige Trennkante gebildet ist. Dabei bietet sich für den Fall des rechtwinkligen Ansetzens der Nabe ein ausreichender Freiraum, was ein ungehindertes Zustellen der Rolle ermöglicht.

Die Erfindung wird nun beispielhaft anhand von Ausführungsbeispielen mit Bezug auf die begleitenden Zeichnungen erläutert. Dabei zeigt:
- Fig. 1: eine teilweise geschnittene Aufsicht einer Drückwalzmaschine in einem ersten Verfahrensstadium;
- Fig. 2: eine teilweise geschnittene Aufsicht einer Drückwalzmaschine in einem zweiten Verfahrensstadium;
- Fig. 3: eine teilweise geschnittene Aufsicht einer Drückwalzmaschine in einem dritten Verfahrensstadium;
- Fig. 4: eine teilweise geschnittene Aufsicht einer Drückwalzmaschine in einem vierten Verfahrensstadium;
- Fig. 5: einen Schnitt durch ein gemäß dem erfindungsgemäßen Verfahren hergestelltes Werkstück;
- Fig. 6: eine teilweise geschnittene Aufsicht einer Drückwalzmaschine in einem fünften Verfahrensstadium;
- Fig. 7: eine teilweise geschnittene Aufsicht einer Drückwalzmaschine in einem sechsten Verfahrensstadium,
- Fig. 8: einen Querschnitt durch eine erfindungsgemäße Rolle,
- Fig. 9: den Querschnitt eines rondenförmigen Ausgangswerkstückes und
- Fig. 10: ein Werkstück mit verdünntem Bereich und Nabe.

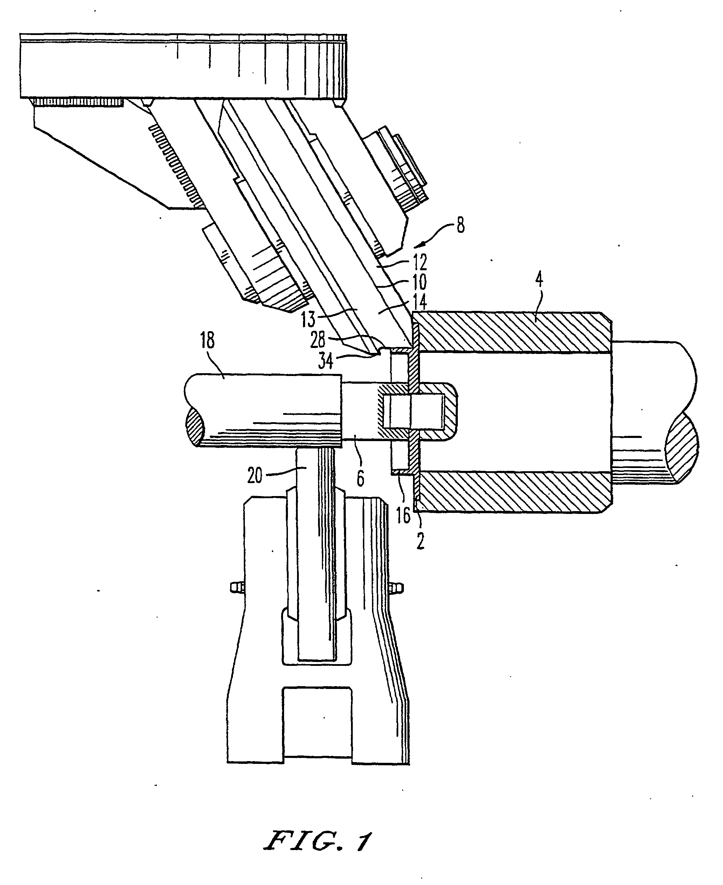

Figur 1 zeigt ein Zwischenstadium bei der Fertigung einer Nabenscheibe aus einem rondenförmigen Werkstück 2. Das Werkstück 2 ist in eine Halterung 4 einer Drückwalzmaschine eingelegt und wird mit einem zylindrischen Gegenhalter 6 in der Halterung 4 festgespannt. Der Außendurchmesser des Gegenhalters 6 entspricht dem Innendurchmesser der herzustellenden Nabe. Die Hauptspindel der Drückwalzmaschine wird zusammen mit dem Gegenhalter 6 in Rotation versetzt, und eine rotationssymmetrische Rolle 8 mit einem speziellen Außenprofil 14 wird radial in Richtung auf das Zentrum des Werkstückes 2 zugestellt. Die Rolle 8 hat eine Schneidkante 10, wobei die an die Kante angrenzenden Umfangsflächen 12, 13 der Rolle 8 einen spitzen Winkel einschließen. Durch das Zustellen der Rolle 8 wird Material teilweise abgetrennt und entlang eines Stauchbereiches 28 der Rolle 8 geleitet, so daß sich, ausgehend von dem rondenförmigen Werkstück 2, ein umlaufender, sich während des Zustellvorganges stets verändernder Kragen 16 ausbildet. Der axiale Materialfuß ist durch eine umlaufende Kante oder einen Vorsprung 34 der Rolle 8 begrenzt. Im vorliegenden Beispiel wird eine Verlängerung 18 des Gegenhalters 6 von einer Stützrolle 20 abgestützt. Dies ermöglicht die Verarbeitung fester Stähle und somit das Einwirken höherer erforderlicher Kräfte.

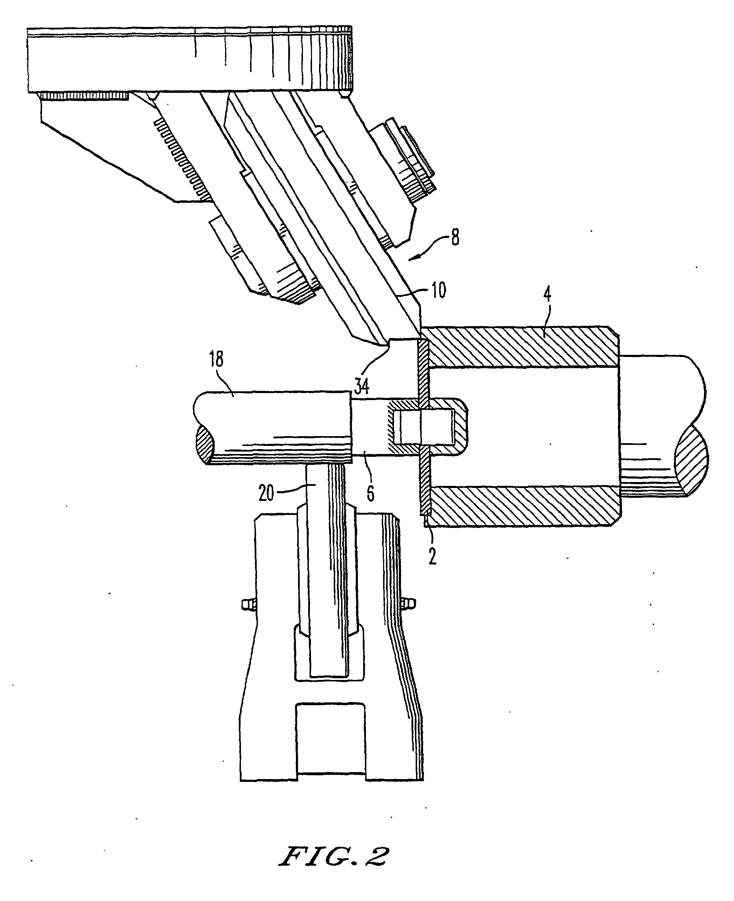

Figur 2 zeigt eine der Fig. 1 vergleichbare Anordnung. Im Unterschied zu Fig. 1 ist hier eine Momentaufnahme dargestellt, bei welcher sich die Rolle 8 am Rand des rondenförmigen Werkstückes 2 befindet. Zu diesem Zeitpunkt hat das Werkstück 2 noch keine Materialverschiebung erfahren. Durch den Kontakt der Schneidkante 10 der Rolle 8 mit dem Rand des Werkstückes 2 wird ausgehend von dem äußeren Rand gleichförmig Material von dem Werkstück 2 abgezweigt und zur Ausbildung der Nabe verwendet. Bei der in Fig. 2 dargestellten Ausführung setzt die Trennkante 10 der Rolle 8 somit am Rand des Werkstückes 2 an. Es ist allerdings ebenfalls denkbar, daß ein Ansetzen erst innerhalb des Randes des Werkstückes 2 erfolgt. Dies hat zur Folge, daß der Randbereich des Werkstückes 2 dicker ist als ein zentraler Bereich, was bei gewissen nachfolgenden Verarbeitungsschritten nützlich sein kann.

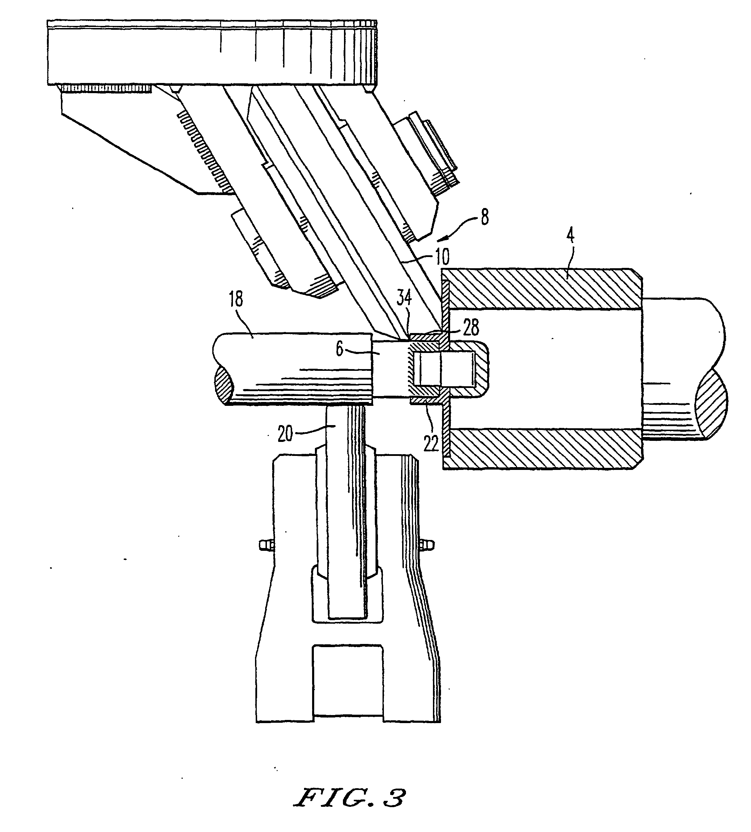

Figur 3 zeigt ein Verfahrensstadium, bei welchem die Nabe 22 an den Gegenhalter 6 angeformt ist. Die axiale Ausdehnung der Nabe 22 ist durch den umlaufenden Vorsprung 34 der Rolle 8 begrenzt. Die Zustellung der Rolle 8 wird zu dem Zeitpunkt beendet, zu dem der Abstand des Stauchbereiches 28 der erwünschten Dicke der Nabe 22 entspricht. In diesem Zustand kann zur Kalibrierung und zur Verfestigung der Nabe 22 in dem erfindungsgemäßen Verfahrensablauf eine Haltezeit eingeplant sein.

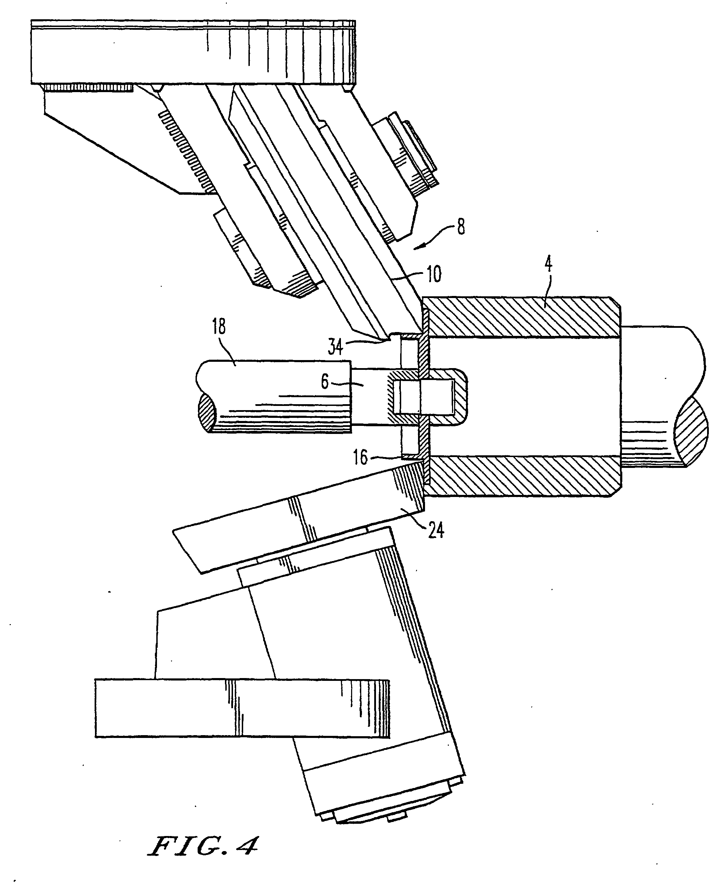

Figur 4 zeigt wiederum einen Zwischenzustand des erfindungsgemäßen Verfahrens. Bei dieser Ausführungsform kommt zumindest eine axiale Stützrolle 24 zur Anwendung, welche alleine oder zusammen mit der oder den radialen Stützrollen 20 gemäß den Fig. 1 bis 3 eingesetzt werden kann. Diese Stützrolle 24 verhindert ein Ausbiegen des Werkstückes 2 während der Umformung und kann zu einer weiteren Verfestigung und Glättung des Rondenrandes führen. Insbesondere ist dies bei geringen Wanddicken nützlich.

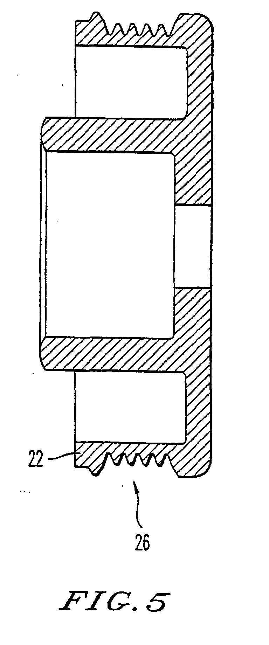

Figur 5 zeigt ein Beispiel eines erfindungsgemäß hergestellten Werkstückes, bei dem nach dem Formen der Nabe 22 der radiale Rondenbereich umgelegt wurde. In dem umgelegten Rondenbereich ist durch Einrollen ein Poly-V-Profil 26 im Außenbereich eingeformt.

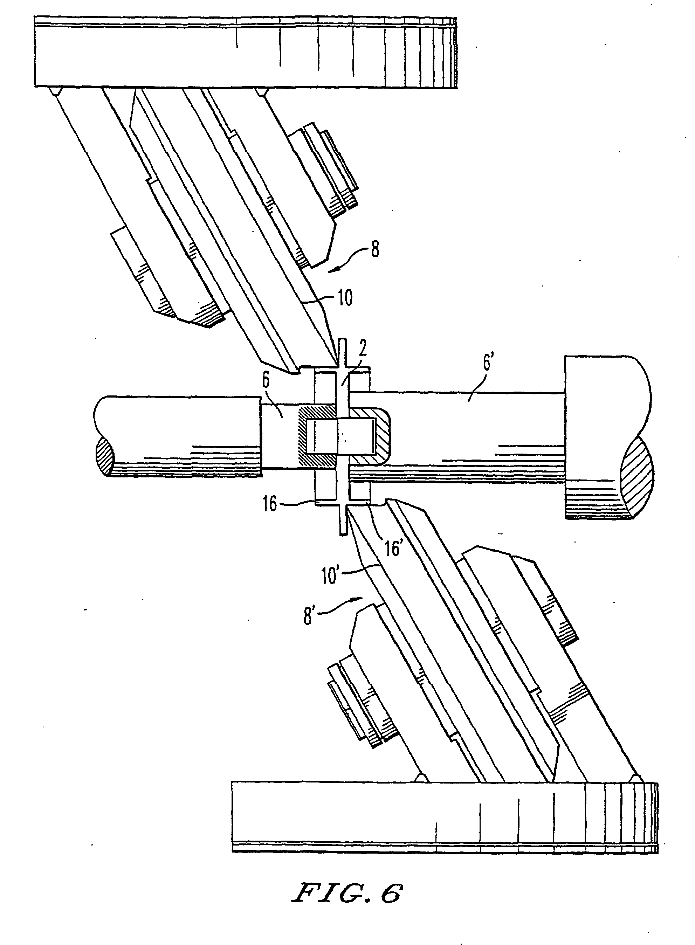

Eine weitere Ausführungsform der vorliegenden Erfindung ist in Fig. 6 dargestellt. Das Besondere ist, daß das Werkstück von zwei Gegenhaltern 6, 6' gehalten wird. Es werden zwei Rollen, 8, 8' gleichzeitig zugestellt, welche auf verschiedenen Seiten des Werkstückes 2 angreifen. Auf diese Weise erhält man auf jeder Seite des Werkstückes 2 einen Kragen 16, 16' und letztlich Naben, welche den jeweiligen Außendurchmessern der Gegenhalter 6, 6' angeformt werden. Somit kann in einem Arbeitsgang auf beiden Seiten des Werkstückes 2 eine Nabe angeformt werden.

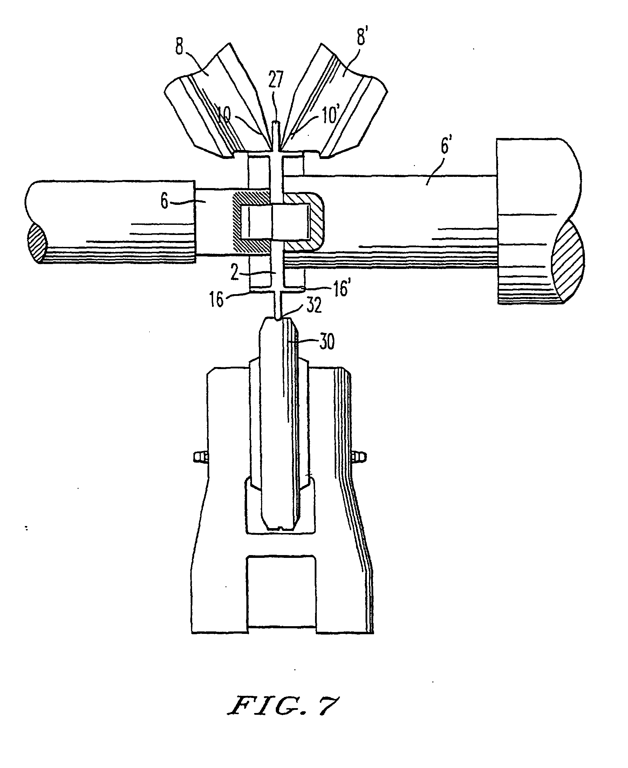

Figur 7 zeigt die Situation, wenn bei der Umformung nur noch ein dünner Mittensteg 27 stehen bleibt oder der Mittensteg 28 geometrisch instabil ist. Dann ist es besonders nützlich, wenn, wie in Fig. 7 dargestellt, eine weitere Stützrolle 30 eingesetzt wird, die den Mittensteg 28 mit einer umlaufenden Nut 32 stabilisiert. Hierdurch wird eine Ausbiegung des Mittensteges 27 verhindert. Gleichzeitig kann die Rolle 30 auch dazu benutzt werden, eine Ausdünnung des Werkstückes in radiale Richtung zu verhindern, die zu einer Durchmesservergrößerung führen würde. Im Anschluß an die Anformung der Naben kann der Mittensteg 27 ebenso wie der Rondenrand bei den anderen Ausführungsformen der vorliegenden Erfindung vielfältig verändert werden.

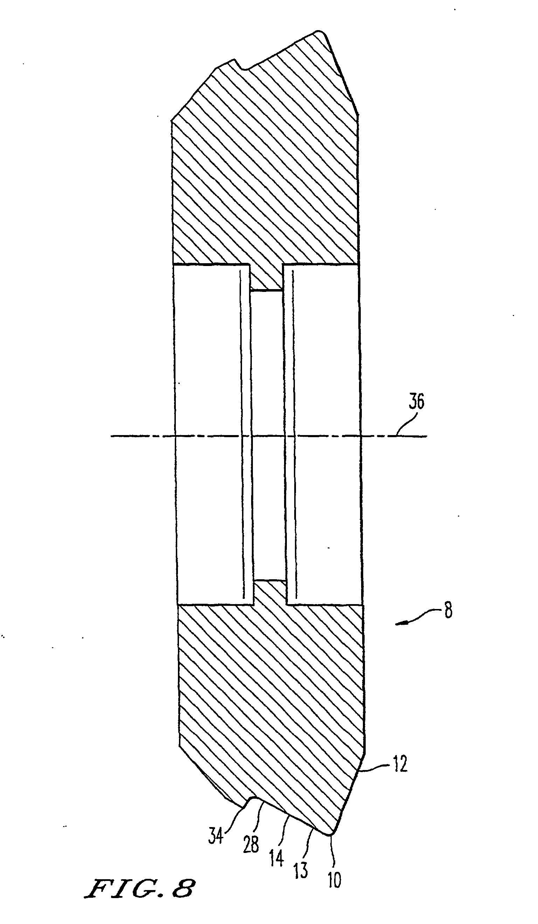

Figur 8 zeigt schließlich ein Beispiel einer erfindungsgemäßen Rolle. Wesentlich sind die Trennkante 10, der daran angrenzende Stauchbereich 28 sowie der sich anschließende radiale Vorsprung 34. Die Umfangsflächen 12, 13 bilden einen spitzen, nahezu rechten Winkel der Trennkante 10, so daß die Rolle 8 bei dem erfindungsgemäßen Verfahren eingesetzt werden kann. Im Betrieb ist die Rolle 8 mit ihrer zum Stauchbereich 28 schräg gerichteten Rotationsachse 36 so angeordnet, daß Material etwa parallel zur Werkstückachse entlang des Stauchbereiches 28 mit dem Außenprofil 14 bis zu dem umlaufenden Vorsprung 34 der Rolle 8 fließt. Dabei ist die axiale Länge und die Form der Nabe durch die Rollengeometrie festlegbar.

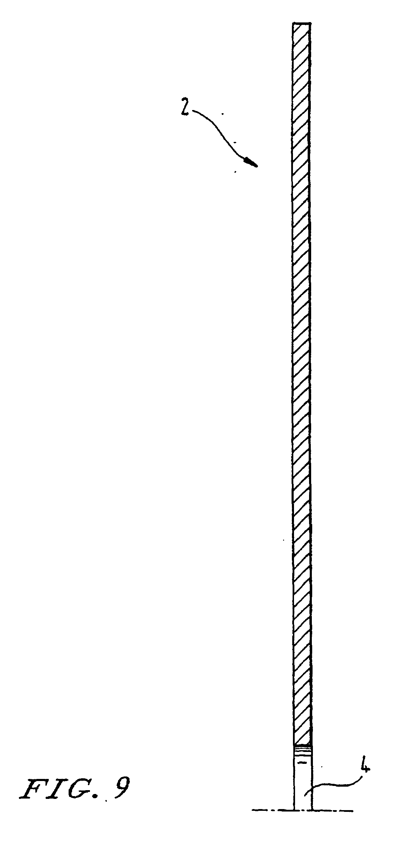

Figur 9 zeigt im Halbschnitt ein rondenförmiges Werkstück 2 mit einem Mittenloch 4. Das Werkstück 2 kann auf verschiedene Weise in einer Maschine eingespannt werden, beispielsweise durch Eingreifen in das Mittenloch 4 oder auch durch zwei in axialer Richtung verschiebbarer Spannbacken.

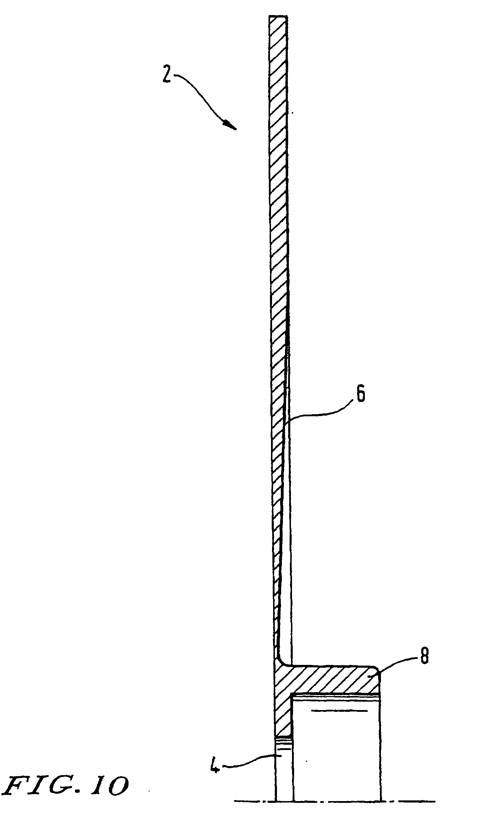

Figur 10 zeigt das Werkstück 2 nach einem ersten Verarbeitungsschritt. Ein innen liegender Bereich 6 ist in radialer Richtung zum Zentrum des Werkstückes 2 hin zunehmend verdünnt. An diesen verdünnten Bereich 6 schließt sich eine Nabe 8 an. Der verdünnte Bereich 6 wird dadurch erzeugt, daß eine Rolle zugestellt wird, welche durch axiales und radiales Einfahren Material des Werkstückes 2 in radiale Richtung verdrängt. Das abgetrennte Material wird zur Ausbildung der Nabe 8 auf einem geeigneten Gegenwerkzeug, etwa dem Spannfutter der Drückwalzmaschine, verwendet.

## Patentansprüche

1. Verfahren zum Formen eines scheibenförmigen Teiles mit Nabe , bei dem
- ein rondenförmiges Werkstück (2) in eine Drückwalzmaschine eingelegt und mit mindestens einem Gegenhalter (6, 6') festgespannt wird, wobei ein Bereich der Außenkontur des Gegenhalters (6, 6') einem Bereich der Innenkontur einer anzuformenden Nabe (22) entspricht,
- das rondenförmige Werkstück (2) in Rotation versetzt wird,
- mindestens eine Rolle (8, 8') mit einer Trennkante (10 10') zugestellt und im wesentlichen radial eingefahren wird, wobei an dem Werkstück (2) Material teilweise abgetrennt wird, und
- das teilweise abgetrennte Material gegen den Gegenhalter (6, 6') geformt und die Nabe (22) angeformt wird,
**dadurch gekennzeichnet,**
- **daß** beim Zustellen der Rolle (8, 8') das teilweise abgetrennte Material von der Trennkante (10, 10') zu einem daran angrenzenden Stauchbereich (28) geleitet wird, dessen Außenprofil (14) einer Außenumfangskontur der anzuformenden Nabe (22) entspricht,
- **daß** das abgetrennte Material entlang des Stauchbereiches (28) der Rolle (8, 8') axial fließt, bis es durch einen Vorsprung (34) an der Rolle ( 8, 8') begrenzt wird,
- **daß** das abgetrennte Material entlang dem Stauchbereich (28) weiter radial gestaucht wird und
- **daß** die Nabe (22) zwischen dem Stauchbereich (28), dem Vorsprung (34) und dem Gegenhalter (6, 6') ausgebildet wird.

2. Verfahren nach Anspruch 1,
**dadurch gekennzeichnet,**
- **daß** das Material entlang des Stauchbereiches (28) durch das radiale Zustellen der Rolle (8, 8') verdickt wird.

3. Verfahren nach Anspruch 1 oder 2,
**dadurch gekennzeichnet,**
**daß** nach dem Beenden des radialen Einfahrens und vor dem Beenden des Formvorganges eine Haltezeit zur Kalibrierung eingeräumt wird.

4. Verfahren nach einem der Ansprüche 1 bis 3,
**dadurch gekennzeichnet,**
**daß** die Nabe (22) und/oder der Gegenhalter (6, 6') und/oder eine Verlängerung (18) des Gegenhalters (6, 6') durch mindestens eine Stützrolle (20) abgestützt werden.

5. Verfahren nach einem der vorhergehenden Ansprüche,
**dadurch gekennzeichnet,**
**daß** zum Abstützen des Werkstückes (2) mindestens eine axiale Stützrolle (24) zugestellt wird.

6. Verfahren nach einem der vorhergehenden Ansprüche,
**dadurch gekennzeichnet,**
**daß** die Rolle (8, 8') mit ihrer Trennkante (10, 10') am Außenrand des Werkstückes (2) ansetzt.

7. Verfahren nach einem der Ansprüche 1 bis 5,
**dadurch gekennzeichnet,**
**daß** die Rolle (8, 8') mit ihrer Trennkante (10, 10') innerhalb des Außenrandes am Werkstück (2) ansetzt.

8. Verfahren nach einem der vorhergehenden Ansprüche,
**dadurch gekennzeichnet,**
**daß** der Rand des umgeformten Werkstückes (2) verdickt und/oder durch Drückwalzen, Bordieren oder Faltstauchen umgeformt wird und mit einer weiteren Rolle ein Profil oder eine Verzahnung eingebracht wird.

9. Verfahren nach einem der vorhergehenden Ansprüche,
**dadurch gekennzeichnet,**
- **daß** das rondenförmige Werkstück (2) in seinem Mittenbereich mit zwei gegeneinander wirkenden Gegenhaltern (6, 6') eingespannt wird und
- **daß** das Werkstück (2) in dieser Einspannung auf beiden Seiten bearbeitet und auf beiden Seiten ein Nabenbereich angeformt wird.

10. Verfahren nach einem der Ansprüche 1 bis 9,
**dadurch gekennzeichnet,**
**daß** die Bearbeitung gleichzeitig durch zumindest zwei Rollen (8, 8') erfolgt.

11. Verfahren nach Anspruch 10,
**dadurch gekennzeichnet,**
**daß** eine Vielzahl von Rollen (8, 8') verteilt über den Umfang des Werkstückes (2) angeordnet und radial zugestellt werden, so daß beim Umformen radial gerichtete Querkräfte weitgehend kompensiert werden.

12. Verfahren nach einem der Ansprüche 1 bis 11,
**dadurch gekennzeichnet,**
**daß** die Rollen (8, 8') paarweise axial gegenüberliegend angeordnet und radial zugestellt werden.

13. Verfahren nach Anspruch 12,
**dadurch gekennzeichnet,**
**daß** zu einem Paar von Rollen (8, 8') eine radial gegenüberliegend, entlang ihres Umfanges mit einer Nut (32) versehene Stützrolle (30) den Außenrand des Werkstückes (2) abstützt.

14. Verfahren nach einem der vorhergehenden Ansprüche,
**dadurch gekennzeichnet,**
**daß** zum Verändern der Wandstärke des Werkstücks (2) die Rolle während des radialen Einfahrens in axialer Richtung verstellt wird.

15. Verfahren nach Anspruch 14,
**dadurch gekennzeichnet,**
**daß** die Wandstärke in einem radial innen liegenden Bereich (6) des Werkstückes (2) radial nach innen verringert wird.

16. Umformrolle, insbesondere zum Formen einer Nabenscheibe nach einem der Ansprüche 1 bis 15,
welche an ihrem Umfang eine Trennkante (10, 10') sowie einen daran angrenzenden Stauchbereich (28) mit einem Außenprofil (14) aufweist,
**dadurch gekennzeichnet,**
- **daß** die Trennkante (10, 10') in einem seitlichen Randbereich angeordnet und zum teilweisen Abtrennen von Material eines radial gerichteten Werkstücks ausgebildet ist und
- **daß** der Stauchbereich (28) an einer von der Trennkante (10, 10') abgewandten Seite einen Vorsprung (34) aufweist, welcher zum Begrenzen eines Materialflusses entlang des Stauchbereiches (28) ausgebildet ist.

17. Rolle nach Anspruch 16,
**dadurch gekennzeichnet,**
**daß** die an die Trennkante (10, 10') angrenzenden Umfangsflächen der Rolle (8, 8') einen spitzen Winkel einschließen und eine keilförmige Trennkante (10, 10') bilden.

## Claims

1. Method for forming a diskshaped piece having a hub, in which
- a circular blank-like workpiece (2) is placed in a flow-forming machine and fixed with at least one overarm support (6, 6'), an area of the outer contour of the overarm support (6, 6') corresponding to an area of the inner contour of a hub (22) to be formed,
- the circular blank-like workpiece (2) is rotated,
- at least one roller (8, 8') having a cutting edge (10, 10') is infed and substantially radially moved in, wherein at the workpiece (2) material is partly separated, and
- the partly separated material is formed against the overarm support (6, 6') and the hub (22) is formed,
**characterized in that**
- during the infeeding of the roller (8, 8') said partly separated material is led by the cutting edge (10, 10') to a compression zone (28) adjacent thereto, the outer profile of which corresponds to an external circumferential contour of the hub (22) to be formed.
- the separated material flows axially along the compression zone (28) of the roller (8, 8') until it is limited by a projection (34) provided at the roller (8, 8'),
- the separated material is further radially compressed along the compression area (28), and
- the hub (22) is formed between the compression area (28) the projection (34) and the overarm support (6, 6').

2. Method according to claim 1,
**characterized in that**
the material is thickened along the compression area (28) by the radial infeeding of the roller (8, 8').

3. Method according to claim 1 or 2,
**characterized in that**
following the ending of the radial moving in and prior to the ending of the forming process, a holding time is allowed for calibration purposes.

4. Method according to one of the claims 1 to 3,
**characterized in that**
the hub (2) and/or the overarm support (6, 6') and/or an extension (18) of the overarm support (6, 6') is supported by at least one supporting roller (20).

5. Method according to one of the preceding claims,
**characterized in that**
at least one axial supporting roller (24) is infed for supporting the workpiece.

6. Method according to one of the preceding claims,
**characterized in that**
the roller (8, 8') is applied with its cutting edge (10, 10') to the outer rim of the workpiece (2).

7. Method according to one of the claims 1 to 5,
**characterized in that**
the roller (8, 8') is applied with its cutting edge (10, 10') within the outer rim to the workpiece (2).

8. Method according to one of the preceding claims,
**characterized in that**
the rim of the formed workpiece (2) is thickened and/or formed by flow-forming, curling or fold compression and a profile or tooth system is-formed by a further roller.

9. Method according to one of the preceding claims,
**characterized in that**
- the circular blank-like workpiece (2) is fixed at its central area by two overarm supports (6, 6') acting against one another and
- the workpiece (2) is worked on both sides in this setting and a hub area is formed on both sides.

10. Method according to one of the claims 1 to 9,
**characterized in that**
working simultaneously takes place through at least two rollers (8, 8').

11. Method according to claim 10,
**characterized in that**
a plurality of rollers (8, 8') are distributed over the circumference of the workpiece (2) and are radially infed, so that radially directed transverse forces are largely compensated during forming.

12. Method according to claim 1 to 11,
**characterized in that**
the rollers (8, 8') are arranged and are radially infed in pairwise axially facing manner.

13. Method according to claim 12,
**characterized in that**
with respect to a pair of rollers (8, 8'), a radially facing supporting roller (30) provided along its circumference with a groove (32) supports the outer rim of the workpiece (2).

14. Method according to one of the preceding claims,
**characterized in that**
for varying the wall thickness of the workpiece (2) the roller is displaced in an axial direction during radial moving in.

15. Method according to claim 14,
**characterized in that**
the wallthickness in a radial internal area (6) of the workpiece (2) is radially inwardly reduced.

16. Forming roller, in particular for forming a hub disk according to one of the claims 1 to 15, which comprises on its circumference a cutting edge (10, 10') and a compression area (28) adjacent thereto having an external profile (14),
**characterized in that**
- the cutting edge (10, 10') is arranged at a lateral marginal area and is formed to partly separate material of a radially directed workpiece, and
- the compression area (28) comprises at a side being averted with respect to the cutting edge (10, 10') a projection (34) which is formed to limit the material flow along the compression area (28).

17. Roller according to claim 16,
**characterized in that**
the circumferential surfaces of the roller (8, 8') adjacent to the cutting edge (10, 10') form an acute angle and a wedge-shaped cutting edge (10, 10').

## Revendications

1. Procédé de formage d'une pièce en forme de disque avec un moyeu, dans lequel
- une pièce (2) en forme de rond est placée dans une machine de fluotournage et est serrée avec au moins un contre-appui (6, 6'), une zone du contour extérieur du contre-appui (6, 6') correspondant à une zone d'un moyeu (22) à former,
- la pièce (2) en forme de rond est mise en rotation,
- au moins un rouleau (8, 8') avec un bord de séparation (10, 10') est approché et introduit sensiblement radialement, de la matière première étant partiellement séparée de la pièce (2), et
- la matière partiellement séparée est formée contre le contre-appui (6, 6') et le moyeu (22) est formé,
***caractérisé***
- ***en ce que**,* lors de l'approche du rouleau (8, 8'), la matière partiellement séparée est envoyée par le bord de séparation (10, 10') à une zone de refoulement (28) contiguë, dont le profil extérieur (14) correspond à un contour périphérique extérieur du moyeu (22) à former,
- ***en ce que*** la matière séparée s'écoule axialement le long de la zone de refoulement (28) du rouleau (8, 8') jusqu'à ce qu'elle soit arrêtée par une saillie (34) sur le rouleau (8, 8'),
- ***en ce que*** la matière séparée est refoulée radialement le long de la zone de refoulement (28), et
***en ce que*** le moyeu (22) est formé entre la zone de refoulement (28), la saillie (34) et le contre-appui (6, 6').

2. Procédé selon la Revendication *1,* ***caractérisé en ce que*** la matière le long de la zone de refoulement (28) est épaissie par l'approche radiale du rouleau (8, 8').

3. Procédé selon la Revendication 1 ou 2, ***caractérisé en ce qu***'au terme de l'introduction radiale et avant le terme de l'opération de formage, on accorde un temps d'arrêt pour le calibrage.

4. Procédé selon l'une quelconque des Revendications 1 à 3, ***caractérisé en ce que*** le moyeu (22) et/ou le contre-appui (6, 6') et/ou un prolongement (18) du contre-appui (6, 6') sont soutenus par au moins un rouleau de soutien (20).

5. Procédé selon l'une quelconque des Revendications précédentes, ***caractérisé en ce qu***'au moins un rouleau de soutien axial (24) est approché pour soutenir la pièce (2).

6. Procédé selon l'une quelconque des Revendications précédentes, ***caractérisé en ce que*** le rouleau (8, 8') se place avec son bord de séparation (10, 10') au niveau du bord extérieur de la pièce (2).

7. Procédé selon l'une quelconque des Revendications 1 à 5, ***caractérisé en ce que*** le rouleau (8, 8') se place avec son bord de séparation (10, 10') à l'intérieur du bord extérieur sur la pièce (2).

8. Procédé selon l'une quelconque des Revendications précédentes, ***caractérisé en ce que*** le bord de la pièce déformée (2) est épaissi et/ou est déformé par fluotournage, bordage ou refoulement-pliage et est un profil ou une denture qui est réalisé avec un autre rouleau.

9. Procédé selon l'une quelconque des Revendications précédentes,
***caractérisé***
- ***en ce que*** la pièce (2) en forme de rond est serrée dans sa zone centrale par deux contre-appuis (6, 6') agissant l'un contre l'autre, et
- ***en ce que*** la pièce (2) est usinée des deux côtés dans ce serrage et une zone de moyeu est formée des deux côtés.

10. Procédé selon l'une quelconque des Revendications 1 à 9, ***caractérisé en ce que*** l'usinage est effectué simultanément par au moins deux rouleaux (8, 8').

11. Procédé selon la Revendication 10, ***caractérisé en ce qu***'une pluralité de rouleaux (8, 8') sont répartis sur la circonférence de la pièce (2) et sont approchés radialement, de telle sorte que, lors du formage, des forces transversales d'orientation radiale soient en grande partie compensées.

12. Procédé selon l'une quelconque des Revendications 1 à 11, ***caractérisé en ce que*** les rouleaux (8, 8') sont disposés par paires en opposition axiale et sont approchés radialement.

13. Procédé selon la Revendication 12, ***caractérisé en ce que****,* pour une paire de rouleaux (8, 8'), un rouleau d'appui (30) radialement opposé et muni d'une rainure (32) le long de sa circonférence soutient le bord extérieur de la pièce (2).

14. Procédé selon l'une quelconque des Revendications précédentes, ***caractérisé en ce que****,* pour modifier l'épaisseur de paroi de la pièce (2), le rouleau est déplacé dans la direction axiale pendant l'introduction radiale.

15. Procédé selon la Revendication 14, ***caractérisé en ce que*** l'épaisseur de paroi est réduite radialement vers l'intérieur dans une zone (6) de la pièce (2) située radialement à l'intérieur.

16. Rouleau de formage, en particulier pour former un disque à moyeu selon l'une quelconque des Revendications 1 à 15, qui présente sur sa circonférence un bord de séparation (10, 10') ainsi qu'une zone de refoulement (28) adjacente avec un profil extérieur (14),
***caractérisé***
- ***en ce que*** le bord de séparation (10, 10') est placé dans la zone de bord latérale et est formé pour séparer partiellement de la matière première d'une pièce orientée radialement, et
- ***en ce que*** la zone de refoulement (28) présente sur un côté opposé au bord de séparation (10, 10') une saillie (34) qui est conformée pour délimiter un flux de matière le long de la zone de refoulement (28).

17. Rouleau selon la Revendication 16, ***caractérisé en ce que*** les surfaces périphériques du rouleau (8, 8') adjacentes au bord de séparation (10, 10') renferment un angle aigu et forment un bord de séparation (10, 10') cunéiforme.
